## Europäisches Patentamt
## European Patent Office
## Office européen des brevets

(11) Publication number: **0 107 166**
**B1**

# EUROPEAN PATENT SPECIFICATION

(45) Date of publication of patent specification: **07.01.88**

(51) Int. Cl.⁴: **G 11 B 15/54**

(21) Application number: **83110361.9**

(22) Date of filing: **18.10.83**

(54) **Tape driving control apparatus.**

(30) Priority: **21.10.82 JP 185660/82**
**23.03.83 JP 49234/83**

(43) Date of publication of application:
**02.05.84 Bulletin 84/18**

(45) Publication of the grant of the patent:
**07.01.88 Bulletin 88/01**

(84) Designated Contracting States:
**DE FR GB**

(56) References cited:
**AT-B- 356 917**
**AT-B- 361 233**
**DE-A-2 713 588**
**DE-A-3 213 745**
**GB-A-2 082 373**

(73) Proprietor: **Matsushita Electric Industrial Co.,
Ltd.
1006, Oaza Kadoma
Kadoma-shi Osaka-fu, 571 (JP)**

(72) Inventor: **Yoshino, Tadashi
28-5, Kasuga-cho
Neyagawa-shi Osaka-fu (JP)**
Inventor: **Mamei, Masayuki
42-5, Miyata-cho 1-chome
Takatsuki-shi Osaka-fu (JP)**

(74) Representative: **Eisenführ & Speiser
Martinistrasse 24
D-2800 Bremen 1 (DE)**

## Description

The invention relates to a tape driving control apparatus including a feed reel stand, a winding reel stand, and a pair of revolution information detecting means for detecting the speed of revolution of the feed reel stand and the winding reel stand, respectively, and in which the winding speed is reduced near the beginning and near the end of the tape, for use in a video tape recorder or the like.

Description of prior art

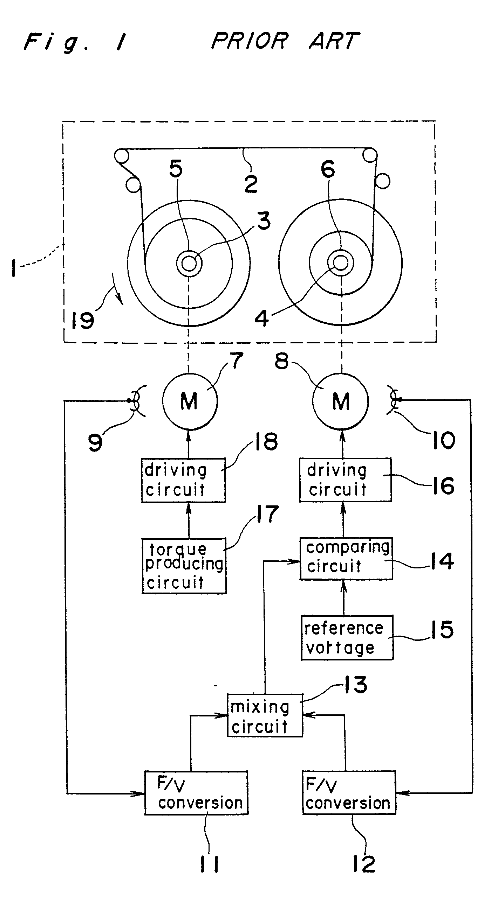

Referring to Fig. 1, there is shown a schematic construction diagram of a tape driving control apparatus for use in the FF (fast forward) condition of the conventional cassette type of video tape recorder (hereinafter referred to as VTR). In Fig. 1, a tape cassette 1 accommodates a magnetic tape 2 which is winding around reels 5, 6. In the VTR, reel shafts 3, 4 on the feed side and the winding side are adapted to be engaged with the reels 5, 6 on the feed side and the winding side of the tape cassette 1. Also, reel motors 7, 8 are provided to drive directly the reel shafts 3, 4 on the feed side and the winding side. In the FF (fast forward) position, the magnetic tape 2 is wound around the reel 6 on the winding side from the reel 5 on the feed side. Frequency detectors (hereinafter referred to as FG) 9, 10 are also provided to detect the revolution speed information of the reel motors 7, 8 on the feed side and the winding side. The output signals of the FGs 9, 10 are inputted into frequency-voltage converting circuits 11, 12 on the feed side and the winding side, wherein the frequencies are converted into the voltages. The outputs of the frequency-voltage converting circuits 11, 12 are added in voltage at the ratio of 1:1 in a mixing circuit 13. The output of the mixing circuit 13 is inputted into a speed comparing circuit 14 on the winding side for comparison with the reference voltage from a speed-setting reference voltage circuit 15. Then, the output of the speed comparing circuit 14 on the winding side is inputted into a reel motor driving circuit 16 on the winding side to control the speed of the reel motor 8 on the winding side. The magnetic tape 2 of the reel 5 on the feed side is wound, around the reel 6 on the winding side, at an approximately constant tape speed. On the other side, an instruction voltage from a back tension torque producing circuit 17 on the feed side is inputted into a reel motor driving circuit 18 on the feed side to flow a given motor current to the reel motor 7 on the feed side to produce the torque in the direction of an arrow 19 so that proper back tension may be produced in the magnetic tape 2.

According to the above described conventional example, the tape speed of the magnetic tape 2 is slowest at the leading end and the trailing end of the magnetic tape and is fastest at the central portion of the magnetic tape 2 both in the FF (fast forward) position and the REW (reverse winding) position. The difference among them is so small that the tape speed is considered almost constant. However, make the tape speed fast to shorten the respective time of the FF (fast forward) and the REW (reverse winding), and extremely large force is applied upon the trailing end of the magnetic tape, thus resulting in the tape being broken due to the fast speed of the tape in the training end portion thereof. Accordingly, in the conventional apparatus, there was a limit to the fast tape speed, and there was a problem in that the respective time of the FF (fast forward), the REW (reverse winding) could not be shortened. Also, as the magnetic tape speed of the FF (fast forward) is almost constant, the revolution number of the reel motor 8 on the winding side in the tape leading end portion becomes extremely fast, thus resulting in noises of the reel motor on the winding side. Particularly, when a reel stand on the winding side is driven by the reel motor on the winding side through a reduction mechanism, such as gears, the noises to be produced from the reduction mechanism are a problem.

Furthermore, in the FF (fast forward) position, a constant current flows to the reel motor 7 on the feed side to produce torque in the direction of an arrow 19. The produced torque Ts of the reel motor 7 on the feed side is as follows.

$$Ts = Krs \times Is \qquad (1)$$

wherein Krs: the torque production constant of the reel motor on the feed side. The tape tension $T_A$ of the exit from the reel 5 on the feed side is as follows.

$$Ts = T_A \times Rs \qquad (2)$$

wherein Rs: the radius of the tape wound around the reel 5 on the feed side.

As the produced torque Ts of the reel motor 7 on the feed side is constant, the tape tension $T_A$ of the exit from the reel 5 on the feed side increases in inverse proportion to the decrease of the radius Rs of the magnetic tape 2 wound around the reel 5 on the feed side. As it passes each post, the tape tension increases in $e^{\mu\theta}$ ($\mu$ is a tape friction coefficient, $\theta$ is a tape winding angle), and the tape tension $T_B$ of the entrance of the reel 6 on the winding side becomes extremely large, and the load of the reel motor 8 on the winding side increases. The speed of the magnetic tape 2 may be slow or the winding operation cannot be effected in the worst case. Also, as the tension changes by the tape winding diameter ratio of the reel 5 on the feed side at the winding leading-end and the winding trailing-end, the tape tension changes as much as approximately three times and the tape running condition becomes worse.

From AT—B—356 917 it is known to control the tape speed in such a way that between a first end position and first predetermined position having a certain address the tape speed is held at a low level, that then the tape speed is increased for fast winding until a second predetermined position having a certain address and that between this position and a second end position the tape speed is lowered again. This type of tape speed control has to be set individually to certain addresses of the first and second predetermined positions in which the tape speed is changed. If on the same tape transport different types and sizes of tapes or cassettes are to be used, i.e. for half an hour capacity or two hours capacity, the values of the addresses have to be changed.

The object of the present invention is to avoid the necessity of such individual adaption of the tape control circuit and to provide a tape driving control apparatus which automatically changes the tape speed from fast speed to low speed independently of the capacity of the used tape or tape cassette.

According to the invention there is provided a tape diameter comparing means receiving the output of the revolution information detecting means and generating an output indicating the diameter of the tape on the feed reel relative to the diameter of the tape on the winding reel and by a speed controlling means receiving the outputs of the revolution information detecting means and of the tape diameter comparing means and including an up/down counter which initially counts up in response to the output of either one of the revolution information detecting means on the feed side or winding side, but counts down in response to the output of the other of the revolution information detecting means after the tape diameter comparing means detects that the diameters of the feed reel and winding reel are equal, the speed controlling means being adapted to control the driving of a reel motor on the winding side so as to wind up the tape at low speed for a period from the beginning of counting up to a first specific count value, to wind up the tape at high speed from the first specific value to a second specific value of counting down, and to wind up the tape at low speed again after passing the second specific value.

These and other objects, features, aspect and advantages of the present invention will become more apparent from the following detailed description of the present invention when taken in conjunction with the accompanying drawings.

Brief description of the drawings

Fig. 1 is a block diagram of a tape driving control apparatus for the conventional cassette type of VTR, as referred to above;

Fig. 2 is a block diagram of a tape driving control apparatus for a cassette type of VTR in an embodiment of the present invention;

Fig. 3 is an input, output characteristics chart of a tape diameter comparing circuit in Fig. 2; and

Fig. 4 is an input, output characteristics chart of a tape winding-number detecting circuit in Fig. 2.

Description of the preferred embodiment

Before the description of the present invention proceeds, it is to be noted that like parts are designated by like reference numerals throughout several views of the accompanying drawings.

According to the present invention, at least one of the leading end and the trailing end of the magnetic tape is in the FF (fast forward) position and the REW (reverse winding) position to delay the tape speed, and to make the magnetic tape speed fast at the central portion of the magnetic tape, and the respective time of the FF (fast forward), the REW (reverse winding) can be considerably shortened while the noises to be caused by the reel motor are being controlled.

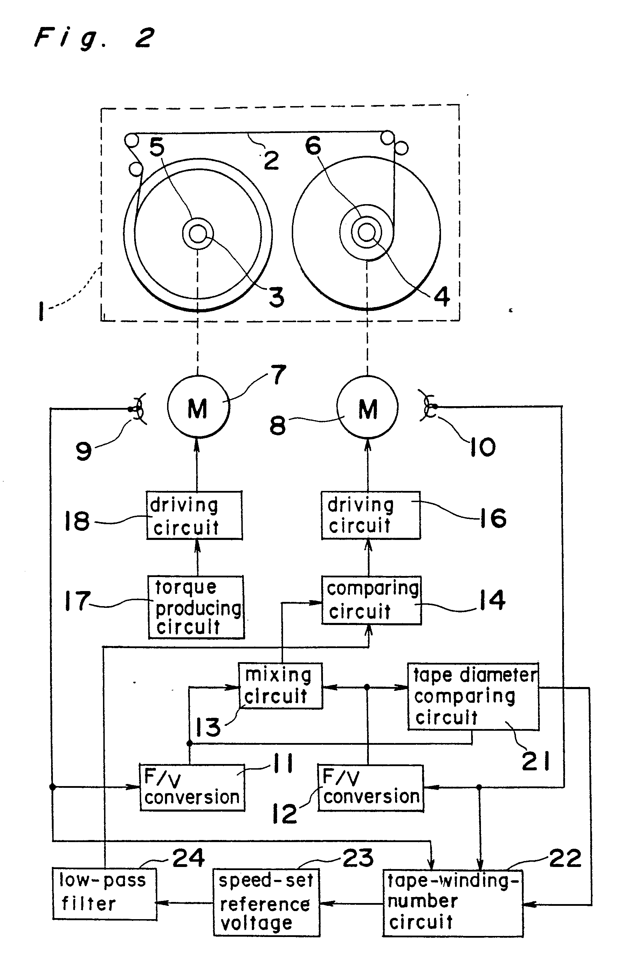

An embodiment of the present invention will be described with reference to Fig. 2, which shows a schematic construction diagram of a tape driving control apparatus in a condition of the FF (fast forward) of a cassette type of VTR according to the present invention. Referring to Fig. 2, a tape cassette 1 comprises a magnetic tape 2 accommodated therein and winding around a pair of reels 5, 6. In the tape driving apparatus of VTR, there is provided a pair of reel shafts 3, 4 on the feed side and the winding side as a feed reel stand and a winding reel stand, both to be engaged with the reels 5, 6 on the feed side and the winding side of the tape cassette 1, respectively. Also, a pair of reel motors 7, 8 are provided to directly drive the reel shafts 3, 4 on the feed side and the winding side. In the FF (fast forward) position, the magnetic tape 2 is wound around the reel 6 on the winding side from the reel 5 on the feed side. Frequency detectors 9, 10 are also provided to detect the revolution speed of the reel motors 7, 8 on the feed side and the winding side. The output signals of the frequency detectors 9, 10 are inputted into frequency-voltage converting circuits 11, 12 on the feed side and the winding side, wherein the frequencies are converted into the voltages. The outputs of the frequency-voltage converting circuits 11, 12 are added in voltage at the ratio of 1:1 in a mixing circuit 13.

Then, the output of the mixing circuit 13 is inputted into a speed comparing circuit 14 on the winding side. On the other hand, the outputs of the frequency-voltage converting circuits 11, 12 are inputted into the tape diameter comparing circuit 21 where they are compared with each other in size. The diameters of the tapes wound around the tape reels on the feed side and the winding side are distinguished in size to decide whether the present position of the tape is in the first half or in the latter half of the entire tape amount.

$$S = \pi \times R_S \times N_S = \pi \times R_T \times N_T \quad (3)$$

$$R_S/R_T = N_T/N_S \quad (4)$$

wherein S (cm/s): magnetic tape speed,

$R_S$(cm): diameter of the tape wound around the reel on the feed side,

$R_T$(cm): diameter of the tape wound around the reel on the winding side,

$N_S$(rps): rps of the reel motor on the feed side,

$N_T$(rps): rps of the reel motor on the winding side.

The produced frequency of the frequency detector is on the feed side $f_S$(Hz):

$$f_S = Z \times N_S \qquad (5)$$

on the winding side $f_T$(Hz):

$$f_T = Z \times N_T \qquad (6)$$

wherein the number of the teeth of the frequency detectors on the feed side and on the winding side, $Z_S = Z_T = Z$ are established.

Therefore,

$$R_S/R_T = f_T/f_S \qquad (7)$$

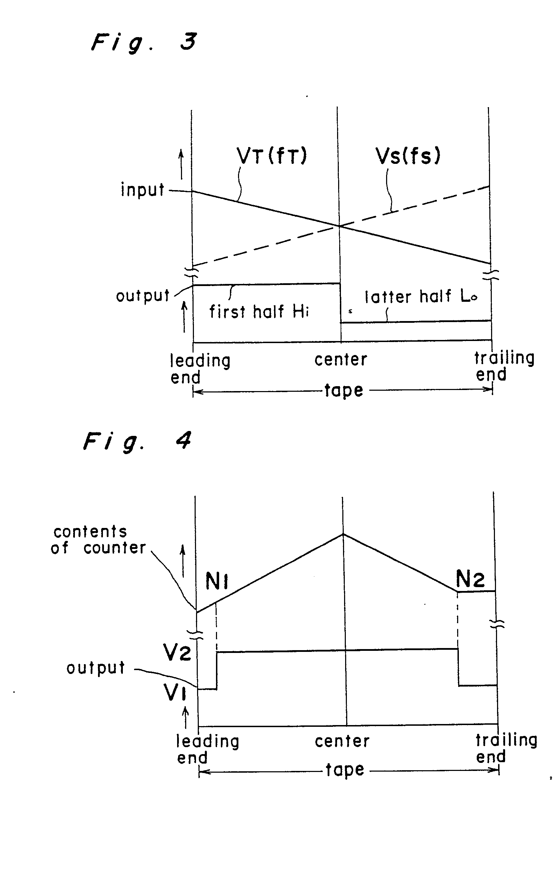

Accordingly, it is possible to distinguish whether the position of the present tape is in the first half of the entire tape or in the latter half thereof through the comparison between the frequencies detected by the frequency detectors. Fig. 3 shows the input, output characteristics during the FF (fast forward) of the tape-diameter comparing circuit 21. In the first half of the magnetic tape, the tape amount of the reel on the feed side is more than the tape amount of the reel on the winding side. As the number of the revolution of the reel motors becomes faster on the winding side, the frequencies detected by the frequency detectors become higher on the winding side. Therefore, the $f_T > f_S$ is established. Even in the outputs of the frequency-voltage converting circuits 11, 12, the $V_T > V_S$ is established wherein Vs: the output on the feed side, $V_T$: the output on the winding side. Thus, the output of the tape diameter comparing circuit 21 becomes "Hi" to distinguish that the present position of the tape is in the first half of the entire tape. In the latter half of the magnetic tape, the condition becomes reverse to the first half. The output of the tape diameter comparing circuit 21 becomes "Lo" to distinguish that the present position of the tape is in the latter half of the entire tape.

Then, the outputs of the frequency detectors 9, 10 and the output of the tape diameter comparing circuit 21 are inputted into a circuit 22 for detecting the number of the tape windings. Fig. 4 shows the input, output characteristics of the tape-winding-number detecting circuit 22. The tape-winding-number detecting circuit 22 is composed of up/down counters. The counter is reset in modes except for the FF (fast forward) and REW (reverse winding) modes. In the first half of the FF (fast forward), the output signals ($f_S$) of the frequency detector 9 on the feed side are counted up as clock signals. Although the output is reversed from $V_1$ to $V_2$ after the first particular value ($N_1$) has been passed, the count-up operation continues. The count-down operation is performed from the contents of the counter wherein the output signals of the frequency detector 10 on the winding side were counted up at the first half as the clock signals from a time point when the tape central point has been past. After the second particular value ($N_2$)

has been passed, the output is reversed again from $V_2$ to $V_1$ to prohibit loading the clock to the counter. The output of the tape-winding-number detecting circuit 22 is inputted into a speed-setting reference voltage circuit 23 to produce two types of speed-set voltages corresponding to the outputs $v_1$, $V_2$ of the tape-winding-number detecting circuit 22. The tape leading end portion and trailing end portion produce low voltages, while the tape central portion produces the high voltage. The output of the speed-set reference voltage circuit 23 is inputted into a speed comparing circuit 14 on the winding side through a low-pass filter 24 to compare with the output of the mixing circuit 13. The output of the speed comparing circuit 14 is inputted into the reel motor driving circuit 16 on the winding side. The reel motor 8 on the winding side is controlled in speed during the FF (fast forward), while small torque is applied, in a counter-clockwise direction, upon the reel motor 7 on the feed side so that proper back tension may be applied upon the magnetic tape 2.

According to the present embodiment, the diameters of the tapes wound around the tape reels on the feed side and on the winding side are distinguished in size through the comparison, in the outputs of revolution information detecting means, between the reel stand on the feed side and the reel stand on the winding side thereby to detect whether the magnetic tape is in the first half or in the latter half. In the first half of the magnetic tape, the counting-up operation is performed by the use of an up/down counter for the number of the windings wound on the table reels on the feed side (or on the winding side) to measure it. In the latter half, the number of the windings wound around the table reel on the winding side (or on the feed side) is counted down with the use of the up/down counter. During the time from a first particular value ($N_1$) at the count-up time to a second particular value ($N_2$) at the count-down time, the speed-set reference voltage of the speed controlling circuit, which controls in speed the revolution number of the reel motor for driving the reel stand on the winding side, is switched so that the number of revolutions may become higher. The low-pass filter 24 is inserted so that the speed-set reference voltage may not make abrupt changes. The failures of the tape can be reduced through prevention of the tape tension from being abruptly changed, and the time required for the FF (fast forward), the REW (reverse winding) can be considerably reduced.

**Claims**

1. A tape driving control apparatus including a feed reel stand (5), a winding reel stand (6), and a pair of revolution information detecting means (9, 10) for detecting the speed of revolution of the feed reel stand and the winding reel stand, respectively, and in which the winding speed is reduced near the beginning and near the end of the tape, characterized by a tape diameter comparing means (21) receiving the output of the revolution information detecting means and generating an output indicating the diameter of the tape on the feed reel (5) relative to the diameter of the tape on the winding reel (6) and by a speed controlling means (22, 23) receiving the outputs of the revolution information detecting means (9, 10) and of the tape diameter comparing means (21) and including an up/down counter which initially counts up in response to the output of either one of the revolution information detecting means on the feed side or winding side, but counts down in response to the output of the other of the revolution information detecting means after the tape diameter comparing means detects that the diameters of the feed reel and winding reel are equal, the speed controlling means being adapted to control the driving of a reel motor on the winding side so as to wind up the tape at low speed for a period from the beginning of counting up to a first specific count value, to wind up the tape at high speed from the first specific value to a second specific value of counting down, and to wind up the tape at low speed again after passing the second specific value.

2. A tape driving control apparatus in accordance with claim 1, wherein the speed controlling means (22, 23) generates a reference signal which is fed to a comparing circuit (14) through a lowpass filter (24) so that said reference signal for controlling the speed of the reel motor (8) on the winding side driving the reel stand (6) on the winding side does not change abruptly.

### Patentansprüche

1. Bandantriebssteuervorrichtung mit einer Zuführspuleneinheit (5), einer Aufwickelspuleneinheit (6) und zwei Drehzahldetektoren (9, 10) zum Feststellen der Drehzahl der Zuführspuleneinheit bzw. der Aufwickelspuleneinheit, wobei die Wickelgeschwindigkeit gegen Anfang und Ende des Bandes hin verringert wird;
dadurch gekennzeichnet, daß eine Banddurchmesservergleichsanordnung (21) vorgesehen ist, die das Ausgangssignal der Drehzahldetektoren empfängt und ein Ausgangssignal erzeugt, das den Banddurchmesser auf der Zuführspule (5) im Vergleich zum Banddurchmesser auf der Aufwickelspule (6) angibt; daß eine Geschwindigkeitssteuereinrichtung (22, 23) vorgesehen ist, die die Ausgangssignale der Drehzahldetektoren (9, 10) und der Banddurchmesservergleichsanordnung (21) empfängt und einen Aufwärts/Abwärts-Zähler enthält, der abhängig vom Ausgangssignal einer der beiden Drehzahldetektoren auf der Zuführ- bzw. Aufwickelseite anfangs aufwärts zählt, jedoch abhängig vom Ausgangssignal des anderen Drehzahldetektors danach abwärts zählt, wenn die Banddurchmesservergleichsanordnung feststellt, daß der Durchmesser von Zuführ- und Aufwickelspule gleich sind; daß die Geschwindigkeitssteuereinrichtung so ausgelegt ist, daß sie den Antrieb eines Spulenmotors auf der Aufwickelspule so steuert, daß das Band vom Beginn des Zählvorganges bis zu einem bestimmten Zählwert mit geringerer Geschwindigkeit aufgewickelt wird, bei Erreichen eines ersten vorbestimmten Wertes bis zu einem zweiten vorbestimmten Wert in der Abwährtszählfolge mit hoher Geschwindigkeit und dann wieder mit geringer Geschwindigkeit aufgewickelt wird, wenn der zweite vorbestimmte Wert erreicht ist.

2. Bandantriebssteuervorrichtung nach Anspruch 1, dadurch gekennzeichnet, daß die Geschwindigkeitssteuereinrichtung (22, 23) ein Referenzsignal erzeugt, das über ein Tiefpaßfilter (24) einer Vergleichsschaltung (14) derart zugeführt wird, daß das Referenzsignal zum Regeln der Geschwindigkeit des die Spuleneinheit (6) auf der Aufwickelseite antreibenden Spulenmotors (8) sich nicht abrupt ändert.

### Revendications

1. Appareil de commande d'entraînement de bande comportant un support (5) de bobine d'alimentation, un support (6) de bobine de bobinage, et une paire de moyens de détection d'information de révolution (9, 10) servant à déterminer respectivement les vitesses de révolution du support de bobine d'alimentation et du support de bobine de bobinage, et dans lequel on réduit la vitesse de bobinage au voisinage du début et au voisinage de la fin de la bande,
caractérisé par un moyen (21) de comparaison de diamètres de bande recevant le signal de sortie des moyens de détection d'information de révolution et produisant un signal de sortie indiquant le diamètre de la bande se trouvant surla bobine d'alimentation (5) par rapport au diamère de la bande se trouvant sur la bobine de bobinage (6), et par un moyen de commande de vitesse (22, 23) recevant les signaux de sortie des moyens de détection d'information de révolution (9, 10) et du moyen de comparaison de diamètres de bande (21) et comportant un compteur ascendant-descendant qui commence par compter dans le sens ascendant en réponse au signal de sortie de l'un ou l'autre des moyens de détection d'information de révolution se trouvant sur le côté alimentation ou le côté bobinage, mais qui compte dans le sens descendant en réponse au signal de sortie de l'autre de ces moyens de détection d'information de révolution après que le moyen de comparaison de diamètre de bande a détecté que les diamètres de la bobine d'alimentation et de la bobine de bobinage étaient égaux, le moyen de commande de vitesse étant conçu pour commander l'entraînement d'un moteur de bobine se trouvant du côté bobinage de façon à enrouler la bande à une faible vitesse pendant une durée qui va du début du comptage jusqu'à une première valeur de comptage particulière, à enrouler la bande à une vitesse élevée de la première valeur particulière à une deuxième valeur particulière de compatage dans le sens descendant, et à enrouler la bande à faible vitesse de nouveau après passage de la deuxième valeur particulière.

2. Appareil de commande d'entraînement de bande selon la revendication 1, où le moyen de commande de vitesse (22, 23) produit un signal de référence qui est délivré à un circuit de comparaison (14) par l'intermédiaire d'un filtre passe-bas (24) si bien que ledit signal de référence permettant de commander la vitesse du moteur de bobine (8) se trouvant du côté bobinage qui entraîne le support de bobine (6) qui se trouve du côté bobinage ne varie pas brusquement.

0 107 166

Fig. 1     PRIOR ART

# Fig. 2

## Fig. 3

VT (fT)    Vs(fs)

input

output

first half Hi    latter half Lo

leading
end    center    trailing
end

⊢————————tape————————⊣

## Fig. 4

contents
of counter

N1    N2

V2

output

V1

leading
end    center    trailing
end

⊢————————tape————————⊣